# EUROPEAN PATENT APPLICATION

(11) **EP 3 002 229 A1**
(43) Date of publication of application: **06.04.2016**
(21) Application number: 14785151.3
(22) Date of filing: 09.04.2014
(51) Int. Cl.: B65D 51/24, B65D 43/02, H04M 1/38

(54) **COMBINED DISPOSABLE CUP LID AND MOBILE PHONE STAND**

(30) Priority: 16.04.2013 KR 20130002953 U
(71) Applicant: Nam, Chul Hwan, Seoul 153-830 (KR)
(72) Inventor: Nam, Chul Hwan, Seoul 153-830 (KR)
(74) Representative: IPR Partners Ltd
(86) International application number: PCT/KR2014/003064
(87) International publication number: WO 2014/171664

(57) **Abstract**

The present invention uses a lid to cover the opening of a cup and uses the lid after the contents therein have been completely drunk, thereby enabling personal portable communication equipment such as a mobile phone, a smart phone and the like to be propped up at an inclined angle facilitating the watching and listening thereof, and the lid, which tightly covers the opening of a cup capable of holding water or a beverage, thereby preventing the overflow of the water or the beverage, comprises: a head portion projected on the upper surface of the lid at a predetermined height so as to have an accommodation space; and a holding groove concavely formed across the head portion so as to be inserted and prop up the lateral side of the personal portable communication equipment. Therefore, the disposable cup is thrown away but the lid is not thrown away after the contents therein have been completely drunk, and the personal portable communication equipment is propped up so as to allow videos to be watched, thereby reducing waste discharge.

## Description

### CROSS-REFERENCE TO RELATED APPLICATIONS

This application is based on and claims priority from Korean Utility Model Application No. 20-2013-0002953, filed on April 16, 2013, with the Korean Intellectual Property Office, the disclosure of which is incorporated herein in its entirety by reference.

### TECHNICAL FIELD

The present disclosure relates to a combined disposable cup lid and mobile phone stand that can hold a personal communication device such as a mobile phone and a smartphone at a convenient angle for watching and listening to the personal communication device, using a lid on the inlet of a disposable cup after a user completely drinks contents.

### BACKGROUND

A reusable disposable cup for including hot drink is generally covered at the inlet with a lid to prevent overflowing of the contents when it is carried. The contents are prevented from leaking by the lid being in close contact with the edge of the inlet of the cup until a user completely drinks the contents, so the cup is convenient to carry. Further, since the cup is made of a reusable material, a user throws away the cup into garbage, so it is convenient to use.

However, the amount of disposable waste increases with an increase in demand, so measures to deal with the waste has been addressed as a social problem and there is a need for a plan for recycling to reduce the amount of waste.

Further, young people who mostly use disposable cups with a drink frequently watch video through personal communication devices. When they watch video, they hold a personal communication device with a hand or lean it on an object such as a book, but they have the change the position of the personal communication device or hold it while watching, when the floor is slippery.

### SUMMARY

The present disclosure has been made in an effort to reduce the amount of waste by increasing usability of a disposable lid and reusing it by providing an angle appropriate for watching for a user who watches video through a personal communication device, using the lid of on a disposable cup.

The present disclosure protects a personal communication device from water or a drink unexpected poured on a floor because the personal communication device is placed not on a floor such as on a desk or a table, but on a lid at an angle at a the height of the lid without being on a floor.

An exemplary embodiment of the present disclosure provides a combined disposable cup lid and mobile phone stand that prevents water or beverage from overflowing outside by covering an inlet of a cup including water or beverage in close contact with the inlet, in which the lid has a head protruding at a predetermined height on the top of the lid to have a space, and a seat recessed across the head to insert a side of a personal portable communication device.

Another exemplary embodiment of the present disclosure provides a configuration having a seat inclining a personal portable communication device at an angle suitable for watching on the top of the lid and formed a control step at the inlet of the seat to lock the edge of the personal portable communication device.

According to the present disclosure, it is possible to prevent overflow of coffee heated at a predetermined temperature while a disposable cup including the coffee is carried or a user drinks the coffee, using a lid, thereby increasing the time for tasting the coffee. Further, a mobile phone can be held at an angle in a seat formed on the top of the lid. Accordingly, it is possible to reuse the lid as a mobile phone stand without throwing away a disposable cup after using it, so it is possible to reduce the amount of waste of disposable products.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a perspective view of a lid to which the present disclosure has been applied.
FIG. 2 is a side view of the lid to which the present disclosure has been applied.
FIG. 3 is a cross-sectional view of FIG. 2.
FIG. 4 is a view illustrating a mobile phone on a lid of the present invention.
FIGS. 5 and 6 are perspective views illustrating other disposable cups to which the present disclosure is applied.

### DETAILED DESCRIPTION

In the following detailed description, reference is made to the accompanying drawing, which forms a part hereof. The illustrative embodiments described in the detailed description, drawing, and claims are not meant to be limiting. Other embodiments may be utilized, and other changes may be made, without departing from the spirit or scope of the subject matter presented here.

The configuration of the present disclosure will be described in detail hereafter.

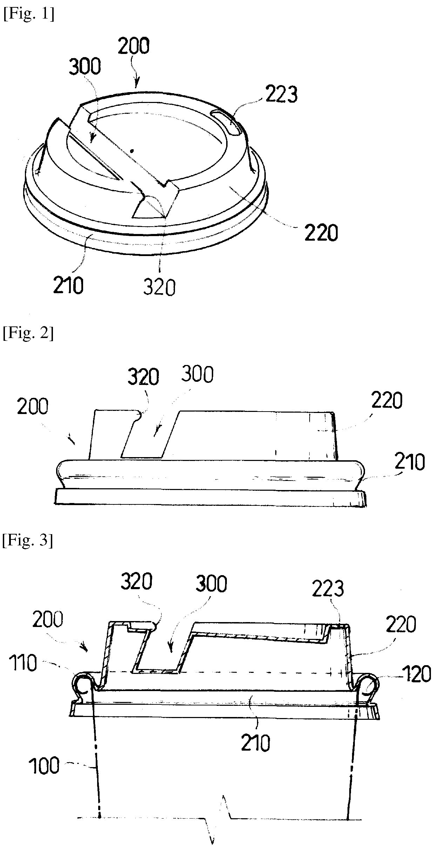

FIG. 1 is a perspective view of a lid to which the present disclosure has been applied. A lid 200 coupled to a disposable cup has a coupling portion 210 that is brought in close contact with the inlet of a cup and a head 220 for a user to stably drink a beverage.

The coupling portion 210 covers the edge of an inlet of a cup in close contact with it to prevent overflowing contents and the head 220 has a space protruding for an appropriate amount of contents can be poured when a user drinks the contents and a hole 233 at a side of the space.

A seat 300 is formed opposite to the hole 223 on the head 220 of the lid 200.

The seat 300 is recessed across the head 220, and as illustrated in the side view of FIG. 2, the inner side of the seat 300 is formed at a predetermined angle suitable for a user to watch a personal communication device.

In particular, a control step 320 for preventing separation of a personal communication device is formed at the inlet of the seat 300, in the cross-section illustrated in FIG. 3.

The present disclosure having the configuration described above is placed over the inlet 110 of the disposable cup 100 to prevent overflowing contents such as water, coffee, and ice tea and to allow an appropriate amount of contents to be poured out through the hole 223 of the head 220 when a user drinks it.

When the contents are completely removed, a user separates the lid 200 from the inlet 110 of the cup 10, places only the lid 200 on a desk or a table, and then inserts a side of a portable personal communication device into the seat 300 on the head 220 of the lid 200.

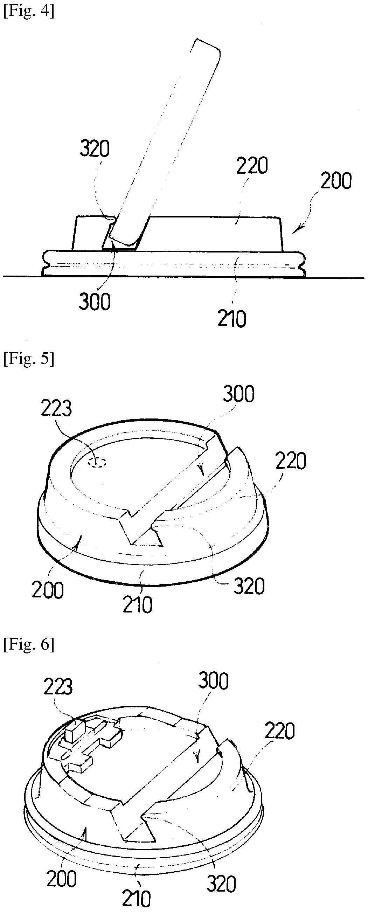

The portable personal communication device that is inserted into the seat 300 is inserted along the inclined inner side of the seat 300, so it is stood at an angle on the lid 200, as illustrated in FIG. 4.

In this case, the control step 320 formed at the inlet of the seat 300 is locked to the frame of the screen edge of the portable personal communication device, thereby preventing the inclined device from being separated.

The lid 200 may have the seat 300 in various shapes, but is generally formed in the shape illustrated in FIGS. 5 to 7. Further, the seat 300 of the present disclosure is not limited when the head 220 is formed to protrude and the seat 300 is formed on the head 220 of common cups other than disposable cups.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A combined disposable cup lid and mobile phone stand that prevents water or beverage from overflowing outside by covering an inlet of a cup including water or beverage in close contact with the inlet, wherein the lid has a head protruding at a predetermined height on the top of the lid to have a space, and a seat recessed across the head to insert a side of a personal portable communication device.

2. The lid of claim 1, wherein the seat of the lid is formed at an angle for standing a personal portable communication device at an angle appropriate for watching the personal portable communication device.

3. The lid of claims 1 and 2, wherein the seat is formed a control step at the inlet for supporting a side of the edge of a personal portable communication device seated at an angle.
